# NEW EUROPEAN PATENT SPECIFICATION

(11) **EP 0 828 657 B2**
(45) Date of publication and mention of the opposition decision: **15.07.2009**
(45) Mention of the grant of the patent: 07.07.1999
(21) Application number: 96910110.4
(22) Date of filing: 19.04.1996
(51) Int. Cl.: B64D 25/00, G09F 13/20

(54) **EMERGENCY LIGHTING**
NOTBELEUCHTUNGSEINHEIT
ECLAIRAGE DE SECOURS

(30) Priority: 20.04.1995 GB 9508065; 08.03.1996 GB 9604994
(43) Date of publication of application: 18.03.1998
(73) Proprietor: Saf-t-Glo Limited, Swaffham, Norfolk PE37 7XD (GB)
(72) Inventor: BODLE, Peter, Winstanley, Norfolk PE32 1SS (GB)
(74) Representative: Lawrence, John
(86) International application number: PCT/GB1996/000936
(87) International publication number: WO 1996/033093

(56) References cited:
- EP-A- 0 489 561
- EP-A1- 0 489 561
- WO-A-87/02813
- WO-A-93/14422
- WO-A-94/16287
- WO-A-94/17766
- WO-A1-94/17766
- WO-A1-87/021813
- FR-A- 964 348
- FR-A- 2 308 155
- FR-A1- 2 308 155
- US-A- 4 401 050
- US-A- 4 401 050
- US-A- 5 270 100
- 'A standard of the photoluminescence safety products association (PSPA)' PSPA STANDARD vol. PART 1,2, 1993,
- US FEDERAL AVIATION ADMINISTRATION REGULATIONS vol. PART 25, 1973,
- MC DONNEL DOUGLAS: 'Compte rendu de tests effectués üar McDonnel Douglas pour l'US Federal Aviation Administration (FAA)' 30 September 1983 - 31 May 1983,
- 'Suplemental type certificate attribué par l'US department of transportation - Federal Aviation Administration' 28 March 1986,
- Plans de Madelec systèmes, de juillet 1986 et 1987
- Documents Madelec Systèmes - Aerospatiale - LS, de 1993 et 1994
- BRITISH STANDARD,1988 vol. BS 5266,
- 'Safety in the build environment', 1988
- BUILDING RESEARCH ESTABLISHMENT (BRE): 'Photoluminescence for aiding escape' FIRE SURVEYOR vol. 17, no. 6, December 1988, pages 17 - 24
- WEBBER GMB ET AL: 'Photoluminescent marking for escape route' BRE INFORMATION PAPER vol. IP179/89, September 1989,
- WEBBER GMB ET AL: 'Emergency wayfinding ligting systems' BRE INFORMATION PAPER vol. IP 1/93, January 1993,
- WEBBER GMB ET AL: 'Emergency lighting and wayfinding in smoke' 1993,
- Meeting of CEN TC169 WG3B wayfinding systems on 19 November 1993, BRE
- Résolution du Safety of Life at Sea (SOLAS), de 1992
- Résolution adoptée en assembléee le 4 novembre 1993 par l'International Maritime Association (IMO)
- Courrier de la Société JALITE à British Airoways, du 7 Décembre 1994
- CREAK, JIM: 'Hospital laundry get a safe evacuation system' HOSPITALS AND EVACUATION April 1995,
- DEMAREE, JAMES: 'Examination of aircraft interior emergency lighting in a postcrash fire environment' June 1982,
- 'Building fire safety' 1985,
- TRIEX GROUP INTERNATIONAL, INC.: 'Non-Electric/Non-Radioactive Photoluminescent Safety Tapes' 1993, SAN LEONARDO, CA94577,
- PJP TRADING LIMITED: 'Special Issue - New Developments in Escape and Safety' INTRAD NEWS vol. 13, September 1989, HATFIELD, HERTFORDSHIRE, ENGLAND,

## Description

This invention relates to emergency lighting, typically for the interior of vehicles, and especially, but not exclusively, to emergency exit floor path lighting for aircraft.

It is well known in aircraft to have strips of electrical lights mounted at floor level to guide passengers to the emergency exit doors of the aircraft. The strips of electric lights are powered by an emergency battery. Such systems work well, but they have some problems.

One problem is that they need regular servicing. The electrics needs checking periodically and bulbs need replacing. Maintenance of the floor-level emergency exit lights adds significantly to the cost of maintaining an aircraft. Also the power drain caused by running the lights adds to fuel costs.

A further problem is that if the emergency battery fails there is no guide lighting for the passengers leading them to the exits.

Another problem is that in the event of a crash the electrical wires connecting some or all of the floor level emergency lights can be broken, again meaning that some or all of the floor-level emergency lights are inoperative at just the time that they are most needed.

It is an aim of one embodiment of the present invention to alleviate at least some of these problems.

According to the invention we provide an aircraft as defined in claim 1.

Thus there is no external power supply to fail and thus the system may be fail safe. The system requires little or no special maintenance, and may simply require wiping or other similar cleaning. The system may be significantly lighter, cheaper and simpler to install than previous systems.

We are aware of WO 94/17766 which discloses a structure for photoluminescent retro-reflective sheeting. A transparent layer is provided as the top-most layer in a sandwich-like structure. On a lower surface of this layer are provided cube-like mouldings which provide the retro-reflective nature. A phosphorescent pigment is provided in an adhesive layer and a white layer is provided as a reflective layer. The photoluminescent illumination emitted only lasts for twenty minutes and this is why it is necessary to provide retro-reflective prisms (so that the signs can be followed by illuminating them with light from torches, etc. once the photoluminescent effect has stopped).

US 4 401 050 discloses a structure for a tape which can be used to indicate escape routes in buildings. A sheet of plastics or mylar is provided with raised portions which are in the shape of arrows. On the rearside of the arrow a photoluminescent material is applied. Adhesive 20 is applied to the back of the tape to allow it to be attached to walls. The photoluminescent material glows for about forty-five minutes.

WO 94/16287 discloses an exit finding system for aircraft cabins which provides both a tactile and visual exit route.

Intrad News, vol. 13, Special Issue, discloses an aircraft according to the pre-characterizing (prior art) portion of claim 1.

In the present invention the guide means is on the floor.

One or both guide means may comprise a substantially continuous track, which may be made of separate sections.

The substantially continuous track providing a substantially continuous path of light from any point to an emergency exit has the advantage that a person will never be lost as they will always have a path, to an exit, to follow. This "continuous cueing" concept is applicable to other situations.

Alternatively the substantially continuous track may provide a substantially continuous path of light from any point to the region of the emergency exit and electrical lighting means may provide lighting in the region of the emergency exit.

Preferably the photoluminescent member is a flexible strip. The support member preferably extends across substantially the full width of the photoluminescent strip. The photoluminescent member is preferably removable from the track and is replaceable. A track may be made of adjacent discrete lengths of profiled extrusion. The photoluminescent strip may also be provided in discrete lengths.

Alternatively the photoluminescent strip may be permanently secured, for example with glue, to either the cover or the support member. In a further embodiment the photoluminescent strip may be co-extruded with either, the cover, or the support member.

The cover member may have a ramped, or sloping, upper surface to facilitate the passage of wheeled vehicles such as trolleys.

Alternatively the cover member may have a low profile so that it provides only a minimal obstruction for wheeled vehicles, such as trolleys.

Preferably the track is laid in short sections. This has several advantages over using a continuous run of track. One advantage is that short runs are not as awkward to handle, another is that they are more resilient in the event of a crash of the vehicle in which the tracks are mounted. A continuous run may tend to be dragged away from the body of the vehicle in such a crash.

Alternatively the track may be laid in a continuous section.

Preferably the cover member of one section may overlap the base member of a neighbouring section. An advantage of this is that neighbouring sections are loosely coupled. A clip may be provided over the joints between the sections of the covering members. Alternatively the sections of the covering members may have no clip and simply butt against a neighbouring section.

Preferably at each end of the track run there are provided end caps. The end caps may be used between the short sections of track.

Preferably to form angled joints the tracks are laid against each other. The sections may be mitred to form an angled joint.

Preferably a layer which is impervious to UV light is used to protect the photoluminescent layer. The UV protecting layer may be a strip mounted on top of the photoluminescent strip or may be a coating on the photoluminescent strip. An advantage of this is that UV light is prevented from reaching the photoluminescent strip, and thus the photoluminescent strip is not degraded by UV light. Also such a layer might additionally, or alternatively, prevent UV light from being emitted from the photoluminescent layer.

Preferably the layer impervious to UV, light is made from a PVC based material or resin, but may be from any other suitable material. Preferably the layer impervious to UV light is translucent to light, or other electromagnetic radiation, other than UV, light.

The transparent or translucent cover may have portions which are stained, painted, dyed or otherwise modified to change the light transmission properties of the cover. Preferably these portions are opaque. An advantage of such opaque portions is that they can be used to cover or mask poor cutting of the carpet. Alternatively the portions may not be opaque and may be used to change the colour of the light emitted from the photoluminescent strip. The method of modifying the light transmission properties may include inserting a coloured filter underneath the cover or may include using a UV protective layer which modifies the colour of the light passing through it.

The photoluminescent layer may be cast onto the base. Alternatively, we may calender a thin layer, and apply that to the base.

Previously photoluminescent members have been made by mixing photoluminescent material with structural material and producing a calendered product. This has the photoluminescent material spread out throughout the depth of the member, when it is only needed at the surface. We have appreciated that by casting a photoluminescent layer on top of a base (or by having a thin calendered layer on top of a base) we can achieve better results.

Furthermore, we provide (e.g. cast) two layers, or more, of photoluminescent material onto a base. This has been found to increase the light emitted, and is easier and cheaper than casting one thick layer. We can control the application of a thin layer better than the application of a thick layer, and so provide (e.g. cast) a plurality of thin layers until we have the thickness (or light-emitting properties) we want.

The photoluminescent layers, are preferably a vinyl layer. The base preferably contains titanium dioxide but may contain other whitening agents. This is believed to capture light to energise the photoluminescent material.

The layers may be co-extruded instead of being cast together.

There is one track to one side of an aisle, for example an aisle between seats, and another track to the other side of the aisle. This doubles the light output in a very simple manner and defines the path in which the user may move.

Preferably there is one, or most preferably a pair, of branch tracks leading from an aisle track to an emergency door. Most preferably the emergency door, or the region of the doorway, is also marked (preferably bounded) by photoluminescent areas. Alternatively there may be no tracking in the region of the emergency door. The guide means in the region of the emergency door may comprise an electrical or other guide means.

The photoluminescent floor-level emergency exit lighting system may be provided as original equipment, or it may be retro-fitted to existing aircraft.

The present invention has the effect of reducing the cost of maintaining an aircraft's emergency exit floor path lighting system in comparison with an electrically-powered system. The maintenance required may simply be cleaning.

We envisage removing an existing electrically powered floor path system and replacing it with a photoluminescent system in accordance with the present invention.

Preferably the photoluminescent strip is covered in a protective see-through material. Preferably the protective material is poly-carbonate, but may be any other suitable see through material, as appreciated by a man skilled in the art.

Securing the aircraft's emergency floor lighting system to the floor of the aircraft through the carpet on the floor (instead of cutting the carpet around the lighting) reduces the amount of cutting of the carpet that is required to match it to the floor path lighting system, which makes it quicker and cheaper to install the carpet. It also means that if the layout of the floor path lighting is changed the existing carpet can still be retained since it does not have great big holes in it at the old location of the lighting system.

It will be appreciated that the carpet may extend under the floor path lighting system.

Preferably a backing member (e.g. a strip or plate) is secured to the floor of the aircraft where the lighting is to be positioned.

Preferably the carpet is laid on top of the backing member.

Preferably locating means is provided on the backing member to locate the lighting. The locating means may be holes or studs which co-operate with studs or holes, respectively, on the lighting.

Such a system has an advantage that cutting of the covering carpet is reduced, resulting in a lower wastage of the carpet, and making it quicker to replace the carpet, and thus the cost of refitting the aircraft is reduced.

The lighting may be provided with a means to temporarily attach it to the floor of the aircraft. The means may comprise velcro (trade mark) (or the like) attached to the lighting strip or may comprise clamps secured at intervals to the cabin floor through holes in the carpet.

We have also made an interesting discovery which is useful in photoluminescent emergency exit pathways, and more widely in photoluminescent signs or displays generally. Up until now if we wanted to have an arrow, or the word EXIT or other words or pictograms, in a photoluminescent sign, or in the exit path line, we can do it by applying an opaque layer above the photoluminescent material, masking out the emitted light. This leaves essentially black markings on a light-emitting background (or vice-versa - we can blank out the background and let the markings glow in the dark).

We have now discovered that some dyes/stains/inks can, when applied over a photoluminescent layer, glow in the dark with a different colour to that of the photoluminescent layer. Thus the sign can have both the background and the markings emitting light. This makes the markings easier to see, and means that more light, overall, is given off by the sign.

Although not claimed a photoluminescent sign or display may comprise a photoluminescent layer of a first colour, and markings of a second colour overlying the photoluminescent layer, the markings being made with a dye or ink (or the like) that, in use, when overlaid, glows in the dark with a different colour from that of the photoluminescent layer.

The colour that the markings emit in the dark may not be the same colour as they reflect in daylight.

The dye or ink may simply filter out some wavelengths of light emitted by the photoluminescent layer, allowing others to pass. Alternatively the dye or ink may be excited by the light emitted by the underlying photoluminescent material and may emit its own light as a response to that excitation.

The dye or ink may itself be photoluminescent with a different colour light from that of the layer beneath it.

Preferably the base photoluminescent layer is yellow more specifically yellow/green. Preferably the pigment has a red colour but may be another colour. The pigment may be a dye, such as POLYVIN MATT FLUORESCENT RED PM 1256 which can be obtained from GIBBON inks and coatings of 25 Deer Park Road, Wimbledon.

The pigment may have incorporated in it a compound which is impervious to UV, light. Blocking UV, light may have the advantages disclosed hereinbefore.

The dye, or other colouring, overlaid above the photoluminescent layer may be such that the photoluminescent light is transmitted through it, but with a changed wavelength spectrum to give a photoluminescent light of a different colour to that of the photoluminescent layer.

Instead of transmitting some wavelengths of light emitted by the photoluminescent layer the dye could emit light of its own.

Preferably the sign or markings has a first region in which the photoluminescent layer is overlaid by the dye which modifies the light emitted to produce light of a different colour, and a second region in which the photoluminescent layer is not covered by the dye and emits light of its natural colour.

There may be more than one layer of photoluminescent material provided with the dye, or other colouring, being provided between the different photoluminescent layers. An advantage of this is that the intensity of the light is increased but a different colour portion is still provided.

Preferably the first or second regions define letters, or a word, or an information - giving graphic symbol.

The dye, or other colouring, may contain mixed Xylenes, 2-Butoxyethanol and Cyolohemnone as active ingredients.

The active ingredients may be provided in the proportions Xylenes <10%, 2-Butoxyethanol <5% and Cyolohexanone <15%.

The photoluminescent material or member may also be reflective, and may be retro reflective.

The member or material may be provided in the form of a sheet of material.

Preferably a layer of reflective material is provided on top of a layer of photoluminescent material. An advantage of such a composite is that it will act as a light source and also reflect light, making it highly visible.

Preferably the layer of reflective material is transparent in addition to being reflective. This may allow light emitted from the photoluminescent material to pass through the reflective layer.

Preferably the layer of reflective material is made from micro-prism reflective material.

Preferably the reflective layer is attached to the photoluminescent layer, using high frequency welding. Preferably the layers are welded together using a lattice work grid pattern. This pattern of welding may prevent the egress of dirt or water into cells created by the welding pattern. The presence of such dirt or water in the cells may prevent the photoluminescent material from working.

Embodiments of the invention will now be described by way of example only, with reference to the accompanying drawings of which:-
**Figure 1** shows a perspective view of a retro-fitted aircraft emergency exit floor path lighting track using existing track;
Figure 2 shows a plan view of an original equipment aircraft exit floor path lighting track;
Figure 3 is a cross-section of the track of Figure 2;
Figure 4 shows the general arrangement of an emergency exit floor path lighting track in an aircraft;
Figure 5 shows detail of the track arrangement near an emergency exit; and
Figure 6 shows an impression of what an aircraft emergency exit floor path system according to the invention will look like in use;

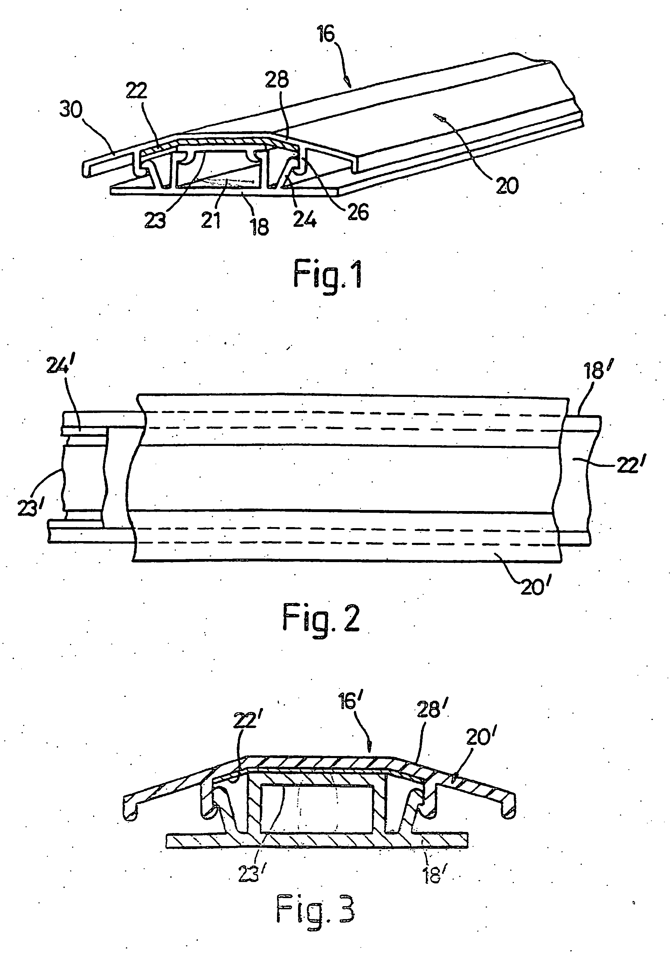

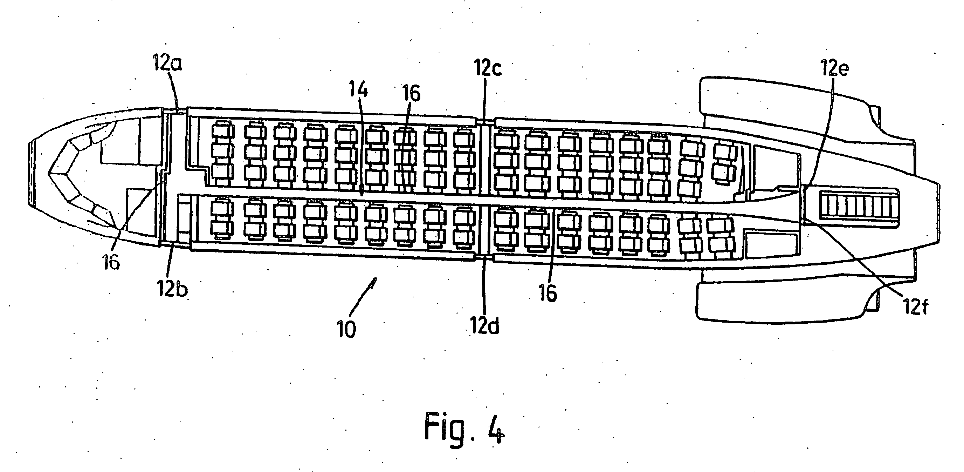

A general view of a system in accordance with the invention is given in Figure 4. This shows an aircraft 10 having emergency exits 12a, 12b, 12c, 12d, 12e, and 12f, and a floor mounted emergency exit pathway indicating system 14. The system 14 comprises a track 16 having a base member 18, a cover 20, and a photoluminescent strip 22 held between the cover and the base member. Figures 1 to 3 show this best. Figure 4 shows that there are two tracks 16 associated with the aisle, and with each emergency exit route: one to either side of the floor path.

Referring to Figure 1, this shows a moulded plastics guide track 16 that has been retro-fitted to an aircraft that originally had an electric emergency floor path lighting system. The original plastics material base section 18 is retained. In an electrical lighting system wires and lights are retained in a channel 21, but in the retro-fitted photoluminescent system they have been removed and the top of the channel 21 has been closed by a plastics material support formation 23 which is releasably snap-fitted to hook formations at the top of the side walls of the channel 21. The photoluminescent strip 22 is a flexible strip of about a millimetre thick. It has a vinyl base which contains titanium dioxide or other whitening agent and has two thin-film layers of photoluminescent material - containing vinyl cast on top of the vinyl base. The photoluminescent material is overlaid by a UV protective top layer (not shown). The strip 22 has the following glow properties:

| | | |
|---|---|---|
| Typical Glow Duration: | Initial | 1300 mcd/m² |
| | 1 minute | 445 mcd/m² |
| | 10 mins | 30 mcd/m² |
| | 30 mins | 8 mcd/m² |
| | 60 mins | 3.8 mcd/m² |

The photoluminescent material emits a yellow light, tinged with green.

In a different embodiment a whitening agent other than titanium dioxide may be used.

We have also tested two other photoluminescent materials to see how the luminance level from a photoluminescent guide strip decays with time (after the light source has been switched off) . The results are given below in Tables 1 and 2.

**Table 1**

| | | | | | |
|---|---|---|---|---|---|
| Table of luminance level (in mcd/m²) over time for photoluminescent composition SG115 ULTRABRITE, for different illumination levels. Test at 23°C. | | | | | |

| **Duration of Charge 20 mins** | | | | | |
|---|---|---|---|---|---|
| Luminance Level | 38Lux | 100 Lux | 150 lux | 200 Lux | 1000 Lux |
| 1 Initial | 154 | 560 | 720 | 985 | 1400+ |
| 2 Secs | 73.4 | 146 | 189 | 216 | 305 |
| 3 1 min | 53 | 96 | 119 | 133 | 173 |
| 4 1 min 10 secs | 42.3 | 72.7 | 88.2 | 97 | 122 |
| 5 2 min | 35.7 | 58.8 | 70.4 | 77.2 | 94 |
| 6 2 min 30 secs | 31.1 | 49.5 | 58.7 | 64.1 | 76.4 |
| 7 3 min | 27.7 | 43.1 | 50.5 | 54.6 | 64.1 |
| 8 3 min 30 secs | 24.8 | 38 | 44.4 | 47.6 | 55.8 |
| 9 4 min | 22.5 | 34 | 39.5 | 42.4 | 48.9 |
| 10 4 min 30 secs | 20.3 | 30.9 | 35.6 | 38.2 | 43.6 |
| 11 5 min | 19.2 | 28.3 | 32.5 | 34.6 | 39.4 |
| 12 6 min | 16.7 | 24.1 | 27.5 | 29.1 | 33 |
| 13 7 min | 14.8 | 21.2 | 23.5 | 25.5 | 28.1 |
| 14 8 min | 13.5 | 18.8 | 21.2 | 22.5 | 24.9 |
| 15 9 min | 12.5 | 17 | 18.9 | 20 | 22.1 |
| 16 10 min | 11.4 | 15.4 | 17.1 | 18.1 | 19.9 |
| 17 20 min | 6.3 | 7.9 | 8.7 | 9.1 | 10.1 |
| 18 30 min | 4.2 | 5.4 | 5.6 | 5.9 | 6.2 |
| 19 60 min | 2.1 | 2.6 | 2.8 | 2.9 | 3.1 |
| 20 120 min | | | | | |

Test Procedure conformed to DIN standard 67 510 part 1.

**Table 2**

| | | | | | |
|---|---|---|---|---|---|
| Table of Luminance level in (mcd/m²) over time for photoluminescent composition SG605 SUPRABRITE, for illumination level of 1000 Lux. Test at 23°C. | | | | | |

| Luminance Level 1000 Lux SUPRABRITE | | | | | |
|---|---|---|---|---|---|
| 1 Initial | 5000 | | | | |
| 2 30 Secs | 1568 | | | | |
| 3 1 min | 1225 | | | | |
| 4 1 min 30 secs | 1004 | | | | |
| 5 2 min | 860 | | | | |
| 6 2 min 30 secs | 746 | | | | |
| 7 3 min | 673 | | | | |
| 8 3 min 30 sec | 605 | | | | |
| 9 4 min | 551 | | | | |
| 10 4 min 30 sec | 505 | | | | |
| 11 5 min | 465 | | | | |
| 12 6 min | 404 | | | | |
| 13 7 min | 356 | | | | |
| 14 8 min | 317 | | | | |
| 15 9 min | 285 | | | | |
| 16 10 min | 259 | | | | |
| 17 20 min | 131 | | | | |
| 18 30 min | 85.7 | | | | |
| 19 60 min | 38.9 | | | | |
| 20 120 min | | | | | |

Test Procedure conformed to DIN standard 67 510 part 1.

Figures 2 and 3 show a track that is similar to that of Figure 1 except that instead of being retro-fitted to an existing electrical track it is original equipment. Instead of having a separate support formation 21, the plastics material base section 18 of the embodiment of Figures 2 and 3 has a box-section support formation 21 integrally moulded with it.

In a different embodiment the track of Figures 2 and 3 may be retro-fitted.

In both of the arrangements of Figure 1 and Figures 2 and 3 the support formation supports the centre of the cover 20, and the strip 22, so that they do not collapse when someone treads on them.

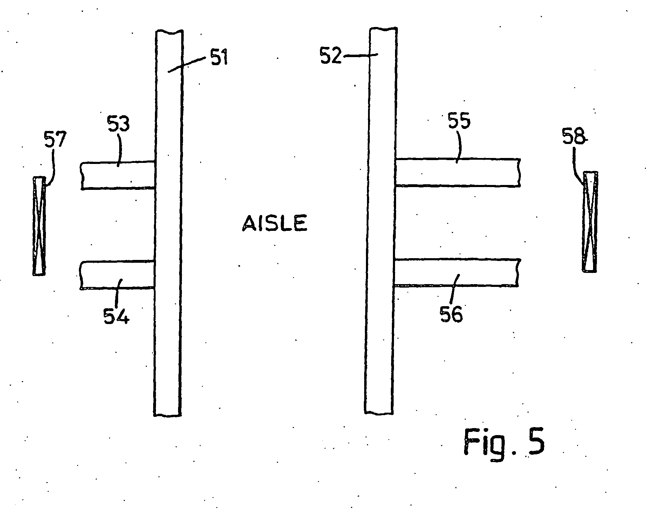

Figure 5 shows detail of the tracks 16 at the region of an emergency exit. The tracks referenced 51,52, are the main aisle tracks extending longitudinally of the aircraft. Branch tracks 53,54,55,56, extend, in pairs, to each emergency door, referenced as 57 and 58. This gives the passengers a lead right up to the emergency exit. It will also be noted from Figure 4 that all of the aisles of the aircraft are bounded by photoluminescent track 16. This means that if a passenger follows a track 16 in any direction he will come to an emergency exit.

We may put arrows, or other indicia, in the track to indicate the direction to the nearest emergency exit. We may also put words in the track, for example "Emergency Exit".

It we do put markings on the photoluminescent tracks we prefer to make them with the dye POLYVIN MATT FLUORESCENT RED PM 1256 or an equivalent colorant that also glows with light of its own colour in the dark.

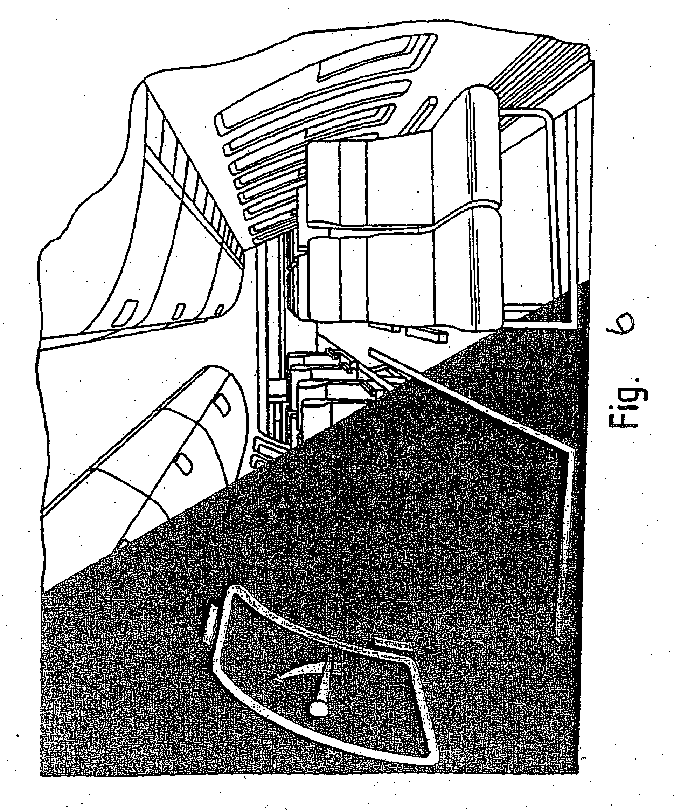

Figure 6 has a right hand portion showing the interior of an aircraft and floor-mounted photoluminescent guide tracks, with the lights of the aircraft on, and a left hand portion showing what a passenger would see with the lights off. A clear path between the parallel photoluminescent tracks of the aisle, and the emergency exit gangways, is defined, and illuminated, for the passenger to escape. The photoluminescence of the pair of tracks is bright enough, at floor level, for reading.

Some detailed features of possible alternative systems which are not shown in the drawings and/or described in detail above are:-

A method of joining tracking together is preferred not to be, continuous runs of strip. This is preferably not used because a) it is unwieldy, and b) on impact it may drag away from the fuselage.

Instead we prefer to use short runs. We use 2m lengths placed butt to butt, with the top cover of one slightly overlapping the base section of the next. We could seal using a small strip clip over the joint of the adjacent butting sections, but at present we do not find it necessary.

We have developed and do intend to use end-caps. These are placed at the beginning and end of track runs. We could use the end caps between the 2 metre runs, but this would break the concept of continuous cueing. This may be acceptable.

For right-angle joins as in cross-aisle, we just put the track against each other. Proper mitring of the joint into right-angles or T-junctions could be performed if appropriate.

One way of attaching the lighting strips to the aircraft floor is to ultrasonically weld the PLM tracking into carpeting. The results of our secret tests so far have been successful.

Another variation of this theme is that we may "black" (make opaque) the flange or edge performs of the otherwise transparent top cover to cover up poor cutting of the carpet/floor covering. Furthermore, changing the colour of the light given off by either colouring the top cover by inserting pigment into the plastic mix or by inserting a coloured filter member between the photoluminescent material (PLM) and the top cover or by putting the pigment or filter in the UV, protective layer or below the UV, protective layer of the PLM is possible.

A major cost in putting in lighting strips is the cost and wastage associated with cutting up the aircraft carpet/floor covering. This means that the carpet is thrown away each time there is a change of layout. Consequently we have a system which does not require the carpet to be cut. A backing plate is secured to the floor of the cabin where the tracking is required to run. This plate either has locator holes or studs, it can work either way, along its length. The carpet is laid on top of it and the photoluminescent tracking (it will have to be a lower profile than the present one) is married up and pressed home attaching to the backing plate. Although the attachment could work male to female, or female to male, we feel that the studs should be on the back plate as it would be far easier to locate.

In addition we feel that as an alternative we may provide a quick release/no damage to the carpet system. This might include some sort of velcro concept for surface mount, or additionally or alternatively clamps for the lighting system secured at regular intervals on the cabin floor. The clamps might be cut into the carpet, and would secure the PLM strip.

We also may wish to combine reflective material with photoluminescent material (PLM) vinyl such that the PLM beneath absorbs light through the surface mounted reflective material whilst shining through the reflective material to give off light.

We could clip the strips to the carpet, use studs (or releasable mechanical fasteners) use hook and fibre fasteners (velcro TM). We could weld the strips to the carpet. We could glue the strips down.

In an effort to reduce the manufacturing costs or running costs of any of the systems outlined in this specification the steps outlined hereinafter may be taken.

A single continuous strip of photoluminescent guide means may be secured along a centre portion of an aircraft's aisle, with intermittent strips along portions of the aisle in the region of the aircraft's seats. Such an arrangement possibly increases the flexibility of the system and reduces the cost of re-arranging the seating plan of the aircraft fitted with photoluminescent guide means. For instance it is known that narrow bodied aircraft may be fitted so that there are two seats on both sides of the aisle, or with three seats on both sides of the aisle or with three seats on one side of the aisle and the two seats on the other. (These seating configurations are only by way of example and are not intended to be limiting). The seating plan of an aircraft may be altered from time to time, changing the configuration of the seats and of the number of seats on each side of the aisle. A consequence of the refit is that the width and centre position of the aisle may be changed. If more than one strip of photoluminescent guide means had been placed along an aisle (for instance a strip along both edge portions of the aisle) then there is a good chance that some of the newly configured seats would overlap the strip requiring the strip to be removed. However, if only a single strip is positioned near to one side, or the centre portion of the aisle then it is unlikely to be overlapped by the seats. The intermittent strips may be attached to the floor before or after the seats have been fitted. It is noted that the fitting of intermittent strips is probably cheaper and simpler than the repositioning of continuous strips of photoluminescent guide means.

The photoluminescent material may have its base material incorporating strontium aluminate SrAl₂O₃ instead of Zinc Sulphide. A second, strontium aluminate based, example of material available from commercial sources has an initial glow of 4700 mcd/m² falling to 300 mcd/m² at 60 minutes.

It has also been realised that crystals of the photoluminescent material give an increased performance when compared to other forms of the material, such as perhaps the calendered product. It may be possible to increase the system performance by attaching crystals to an adhesively backed tape and then securing the tape to the area requiring the photoluminescent material. Also it may be possible to embed the crystals in a (possibly clear) clear resin/polymer etc, to form a strip of the crystal containing resin/polymer and then attach the strip as described elsewhere in this specification.

It will be appreciated that reducing the number of manufacturing steps required to produce an item should reduce the cost of that item. Accordingly, we can now suggest various different techniques, to reduce the number of manufacturing steps, which may result in producing a cheaper photoluminescent strip.

For instance we have proposed mounting a strip of material with photoluminescent properties between a base layer and a covering layer. The covering layer may be clear plastic and the base layer covered in a reflective, or whitening, agent (eg TiO₂) to enhance the amount of light emitted from the system.

Also the base member may be coated, in a similar manner to the cover member, with a TiO₂ layer. This TiO₂ layer is desirable to enhance the light output as discussed elsewhere in the specification.

The TiO₂ may be incorporated into the material of the base unit.

The need for using a TiO₂ layer may be removed if the base member is formed from a white plastics material. The white plastic may or may not contain TiO₂.

To make the final product easier to use it may be desired to have the thickness of the photoluminescent guide means equal to that of the carpet used in an aircraft. The guide means would then offer a minimum resistance to trollies (such as used to serve refreshments) and reduce the risk of tripping persons passing over the guide means.

## Claims

1. An aircraft (10) having a passenger holding arena including rows of seats either side of an aisle, an emergence exit path lighting system (14) comprising photoluminescent guide means (16;16') mounted at or near floor level and adapted to photoluminescence in an emergency situation to indicate to a user a path for movement from any point in the passenger-holding area to a region of an emergency exit (12a,12b,12c,12d,12e,12f) without requiring input of activation energy or signals at that time and independently of the provision of electrical power at the time of an emergency, the photoluminescent guide means (16;16') comprising two elongate photoluminescent tracks (51,52) spaced apart so as to define therebetween the path within which the user should move, **characterised in that** each photoluminescent track (51,52) comprises of a base member (18) secured to the floor, a transparent or translucent cover member (20,20') releasably secured to the base member and a photoluminescent guide member (22) sandwiched between the base member and the cover member wherein the photoluminescent guide member (22) comprises two or more layers of photoluminescent.material provided on a base and the base member (18) has a support formation that supports the guide member so that it can withstand being trodden upon.

2. An aircraft according to claim 1 **characterised in that** said cover (20) has a sloping (28, 30) upper surface to facilitate the passage of wheeled vehicles such as trolleys.

3. An aircraft according to claim 1 **characterised in that** each track is laid in sections, said cover member (20) of one section overlapping the base member of a neighbouring section.

4. An aircraft (10) according to any preceding claim, in which one or both of said guide means comprises a substantially continuous track of photoluminescent material and provides a substantially continuous path of light from any point to the region of an emergency exit.

5. An aircraft (10) according to any preceding claim, **characterised in that** portions of said covers (20) are stained, painted, dyed or otherwise modified to change the light transmission properties of the cover.

6. An aircraft (10) according to any preceding claim **characterised in that** a branch track, or pair of branch tracks (53,54), is provided leading from one of said elongate photoluminescent tracks (51,52) to the emergency exit (12a, 12b, 12c, 12d, 12e, 12f).

7. An aircraft (10) according to any preceding claim **characterised in that** the colour of the photoluminescent light given off by the photoluminescent guide means (16) is changed by colouring a plastic top cover (20) by pigmenting the plastic of the top cover, or by providing a colored filter member between the photoluminescent material and the top cover (20), or by pigmenting or filtering a UV protective slayer provided in the guide means.

8. An aircraft according to any preceding claim **characterised in that** the tracks (51, 52) are made of adjacent discrete lengths of profiled extrusion.

9. An aircraft according to any preceding claim **characterised in that** the emergency exit (12a, 12b, 12c, 12d, 12e, 12f) is marked or bounded by photoluminescent areas.

## Patentansprüche

1. Luftfahrzeug (10) mit einem Fahrgastbereich mit Sitzreihen beiderseits eines Ganges, einem Beleuchtungssystem (14) für Wege zu Notausgängen mit einer photolumineszenten Führung (16; 16'), die auf oder nahe dem Fußbodenniveau angeordnet ist und in einer Notfallsituation Photolumineszenz erzeugen kann, um einem Nutzer einen Weg von einem beliebigen Punkt im Fluggastbereich zum Bereich eines Notausgang (12a, 12b, 12c, 12d, 12e, 12f) zu zeigen, ohne dann und unabhängig von einer Stromzufuhr im Notfallzeitpunkt eine aktive Zufuhr von Energie oder Signalen zu erfordern, wobei die photolumineszente Führung (16; 16') zwei lang gestreckte photolumineszente Schienen (51, 52) aufweist, die beabstandet sind und zwischen sich den Weg bilden, auf dem der Nutzer sich bewegen soll, **dadurch gekennzeichnet, dass** jede photolumineszente Schiene ein am Fußboden befestigtes Grundelement (18), ein am Grundelement lösbar befestigtes transparentes oder durchscheinendes Deckelement (20, 20') und ein photolumineszentes Führungselement (22) aufweist, das zwischen das Grund- und das Deckelement eingefügt ist und zwei oder mehr Schichten aus photolumineszentem Material auf einer Unterlage aufweist, wobei das Grundelement (18) eine Stützausformung aufweist, die das Führungselement so abstützt, dass es begehbar ist.

2. Luftfahrzeug nach Anspruch 1, **dadurch gekennzeichnet, dass** das Deckelement (20) eine schräg abfallende Oberseite (28, 30) hat, um von mit Rädern versehenen Fahrzeugen wie bspw. Trolleys befahrbar zu sein.

3. Luftfahrzeug nach Anspruch 1, **dadurch gekennzeichnet, dass** die Schienen jeweils in Abschnitten verlegt sind, wobei das Deckelement (20) eines das Grundelement eines benachbarten Abschnitts überlappt.

4. Luftfahrzeug (10) nach einem vorgehenden Anspruch, bei dem eine oder beide Führungen eine im wesentlichen durchgehende Schiene aus photolumineszentem Material aufweisen und einen im wesentlichen durchgehenden Lichtweg von einem beliebigen Punkt zum Bereich eines Notausgangs bereit stellen.

5. Luftfahrzeug (10) nach einem vorgehenden Anspruch, **dadurch gekennzeichnet, dass** Teile der Deckelemente (20) eingefärbt, mit Farbe bestrichen, oder sonstwie modifiziert sind, um die Lichtdurchgangseigenschaften des Deckelements zu ändern.

6. Luftfahrzeug (10) nach einem vorgehenden Anspruch, **dadurch gekennzeichnet, dass** eine oder ein Paar Schienen (53, 54) vorgesehen ist, die von einer der lang gestreckten photolumineszenten Schienen (51, 52) zum Notausgang (12a, 12b, 12c, 12d, 12e, 12f) hin abzweigt bzw. abzweigen.

7. Luftfahrzeug (10) nach einem vorgehenden Anspruch, **dadurch gekennzeichnet, dass** die Farbe das von der photolumineszenten Führung (16) abgegebenen photolumineszenten Lichts durch Ändern einer Kunststoff-Abdeckung (20) geändert wir, indem man den Kunststoff der Abdeckung pigmentiert oder zwischen dem photolumineszenten Material und der Abdeckung (20) ein farbiges Filterelement anordnet oder eine UV-Schutzschicht in der Führung pigmentiert oder filtert.

8. Luftfahrzeug nach einem der vorgehenden Anspruch, **dadurch gekennzeichnet, dass** die Schienen (51, 52) aus aufeinander folgenden diskreten Abschnitten extrudierter Profilschienen hergestellt sind.

9. Luftfahrzeug nach einem der vorgehenden Anspruch, **dadurch gekennzeichnet, dass** der Notausgang (12a, 12b, 12c, 12d, 12e, 12f) durch photolumineszente Flächen markiert oder umgrenzt ist.

## Revendications

1. Aéronef (10) comportant une zone de cabine passagers comprenant des rangées de sièges de chaque côté d'une aile, un système d'éclairage de trajet d'évacuation d'urgence (14) comprenant un moyen de guidage photoluminescent (16 ; 16') monté au niveau du plancher ou à proximité de celui-ci et conçu pour être photoluminescent dans une situation d'urgence pour indiquer à un usager un trajet de déplacement depuis un point quelconque de la zone de cabine passagers de l'aéronef jusqu'à la région d'une issue de secours (12a, 12b, 12c, 12d, 12e, 12f) sans nécessiter la fourniture d'énergie d'activation ou de signaux à cet instant, et indépendamment de l'application d'une alimentation électrique au moment d'une urgence, le moyen de guidage photoluminescent (16 ; 16') comprenant deux pistes photoluminescentes allongées (51, 52) espacées de façon à définir entre elles le trajet suivant lequel l'usager doit se déplacer, **caractérisé en ce que** chaque piste photoluminescente (51, 52) comprend un élément de base (18) fixé au plancher, un élément de couverture transparent ou translucide (20, 20') fixé de façon amovible à l'élément de base et un élément de guidage photoluminescent (22) pris en sandwich entre l'élément de base et l'élément de couverture où l'élément de guidage photoluminescent (22) comprend deux ou plusieurs couches de matériau photoluminescent déposées sur une base et l'élément de base (18) possède une formation de support qui supporte l'élément de guidage de façon à ce qu'il puisse supporter d'être piétiné.

2. Aéronef selon la revendication 1, **caractérisé en ce que** ledit élément de couverture (20) présente une surface supérieure biseautée (28, 30) afin de faciliter le passage de véhicules munis de roues tels que des tables roulantes.

3. Aéronef selon la revendication 1, **caractérisé en ce que** chaque piste est installée par sections, ledit élément de couverture (20) d'une section chevauchant l'élément de base d'une section voisine.

4. Aéronef (10) selon l'une quelconque des revendications précédentes, dans lequel l'un ou les deux dits moyens de guidage comprend une piste pratiquement continue de matériau photoluminescent et réalise un trajet pratiquement continu de lumière depuis un point quelconque jusqu'à la région d'une sortie de secours.

5. Aéronef (10) selon l'une quelconque des revendications précédentes, **caractérisé en ce que** des parties desdites couvertures (20) sont colorées, peintes, teintées ou modifiées d'une autre manière pour faire varier les propriétés de transmission de la lumière de la couverture.

6. Aéronef (10) selon l'une quelconque des revendications précédentes, **caractérisé en ce qu'**une piste d'embranchement, ou une paire de pistes d'embranchement (53, 54) est prévue, conduisant depuis l'une desdites pistes photoluminescentes allongées (51, 52) jusqu'à la sortie de secours (12a, 12b, 12c, 12d, 12e, 12f).

7. Aéronef (10) selon l'une quelconque des revendications précédentes, **caractérisé en ce que** la couleur de la lumière photoluminescente produite par le moyen de guidage photoluminescent (16) est modifiée en colorant une couverture supérieure en matière plastique (20) par pigmentation de la matière plastique de la couverture supérieure, ou bien en prévoyant un élément de filtre coloré entre le matériau photoluminescent et une couverture supérieure (20), ou bien en pigmentant ou en filtrant une couche protectrice pour ultraviolets prévue dans le moyen de guidage.

8. Aéronef selon l'une quelconque des revendications précédentes, **caractérisé en ce que** les pistes (51, 52) sont faites de longueurs discrètes adjacentes d'une extrusion profilée.

9. Aéronef selon l'une quelconque des revendications précédentes**, caractérisé en ce que** la sortie de secours (12a, 12b, 12c, 12d, 12e, 12f) est repérée ou limitée par des zones photoluminescentes.
